# EUROPEAN PATENT APPLICATION

(11) **EP 4 815 532 A1**
(43) Date of publication of application: **30.09.2026**
(21) Application number: 24910549.5
(22) Date of filing: 02.12.2024
(51) Int. Cl.: H04W 12/03

(54) **COMMUNICATION METHOD AND APPARATUS**

(30) Priority: 28.12.2023 CN 202311852056
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN)
(74) Representative: Pfenning, Meinig & Partner mbB
(86) International application number: PCT/CN2024/136116
(87) International publication number: WO 2025/139617

(57) **Abstract**

A communication method and apparatus, where the method includes: receiving a first reference signal from a network device; determining a first channel key based on the first reference signal; where the first channel key is used for encrypting and/or integrity protection of a message sent before a security mode is activated; and sending a first message; where the first message is encrypted and/or integrity protected using the first channel key, and the first message includes identification information of a terminal device. According to this method, the first channel key is generated based on the first reference signal from the network device during an initial access process; thereby, the first message, which includes the identification information of the terminal device, can be encrypted and/or integrity protected using the first channel key before the security mode is activated, thereby resisting potential attacks, so that the terminal device and the network device can exchange important information during the initial access process, thereby improving the security of data transmission.

## Description

### CROSS-REFERENCE TO RELATED APPLICATIONS

This application claims priority to Chinese Patent Application No. 202311852056.5, filed with the China National Intellectual Property Administration on December 28, 2023, and entitled "Communication Method and Apparatus", which is incorporated herein by reference in its entirety.

### Technical Field

This application relates to the field of communication technologies, and in particular, to a communication method and apparatus.

### Background Technology

In wireless communication, communication security is a crucial factor, involving the protection of user data security. Pseudo base station attacks are a common method that threatens wireless security: a pseudo base station is an illegal base station, typically composed of simple wireless devices and dedicated open-source software. Pseudo base stations can simulate a legitimate base station and send signaling to target terminal devices according to relevant protocols, thereby obtaining information about the target terminals. Especially before the initial access process of a terminal device to the base station, when the security mode is not yet activated, the signaling lacks integrity protection and encryption. As a result, the terminal device cannot verify the integrity of the received signaling messages, and third parties can eavesdrop on the plaintext messages transparently transmitted between the base station and the terminal.

To ensure secure communication between the base station and the terminal, the base station may initiate a security mode after the terminal device initially accesses the network, and send parameters such as an encryption key and an integrity protection key (KEY) for implementing integrity protection to the terminal device. Subsequent signaling interactions between the base station and the terminal device can then encrypt the transmitted data based on the encryption key, thereby achieving data encryption and air interface integrity protection.

However, currently, before the base station sends an encryption key and an integrity protection key KEY to the terminal device, the signaling exchanged between the base station and the terminal device does not undergo data encryption and integrity protection. Before the security mode is activated between the base station and the terminal device, a fake base station can eavesdrop on the signaling exchanged between the base station and the terminal device, for example, by obtaining the identification information of the terminal device. Therefore, how to improve system security is an urgent issue that needs to be addressed.

### Summary of the Invention

This application provides a communication method and apparatus to improve system security.

According to a first aspect, this application provides a communication method, where an execution body of the method is a terminal device or a module or chip in a terminal device, and an example in which the terminal device is the execution body is used for description herein. The method includes: receiving a first reference signal from the network device; determining a first channel key based on the first reference signal, where the first channel key is used to perform encryption and/or integrity protection on a message sent before a security mode is activated; and sending a first message, where the first message is encrypted and/or integrity protected by using the first channel key, and the first message includes identification information of a terminal device.

According to this method, in an initial access process, the first channel key is generated based on the first reference signal from the network device. When a first message including identification information of the terminal device is sent before the security mode is activated, the first message is encrypted and/or integrity protected by using the first channel key, thereby resisting potential attacks, so that the terminal device and the network device can complete exchange of important information in the initial access process, thereby improving data transmission security.

In a possible implementation, the method further includes: receiving first information from the network device, where the first information is used to indicate a first resource; and sending a second reference signal and first correction information by using the first resource, where the first correction information is determined based on the first channel key, the second reference signal is used to determine a second channel key, and the first correction information is used to correct the second channel key.

According to this method, the network device may correct the generated second channel key by using the first correction information, so that the corrected second channel key is the same as the first channel key. This can ensure that the network device and the terminal device can decrypt messages sent by each other.

In a possible implementation, the first information is located in a system information block, or the first information is located in a random access response message in a random access process, or the first information is located in a second message.

The message is a message in an initial access process, so that the terminal device can send the second reference signal in the initial access process, so that the network device determines the second channel key based on the second reference signal, thereby improving security of data transmission in the initial access process.

In a possible implementation, the method further includes: receiving second correction information from the network device, where the second correction information is used to correct the first channel key; correcting the first channel key based on the second correction information to obtain the corrected first channel key; and the corrected first channel key is used to perform encryption and/or integrity protection on a message sent before the security mode is activated.

By using this method, the first channel key is corrected by using the second correction information, so that the corrected first channel key is the same as the second channel key generated by the network device, thereby ensuring that the network device and the terminal device can decrypt messages sent by each other.

In a possible implementation, the determining a first channel key based on the first reference signal includes: determining a first channel measurement result based on the first reference signal; determining a value of a first channel characteristic parameter based on the first channel measurement result; and determining the first channel key based on the value of the first channel characteristic parameter and a first channel key generation algorithm.

In a possible implementation, the method further includes: receiving a system information block or a second message from the network device, where the system information block or the second message includes at least one of the following: a channel characteristic parameter list, where the channel characteristic parameter list includes at least one channel characteristic parameter; or a channel key generation algorithm list, where the channel key generation algorithm list includes at least one channel key generation algorithm.

This implementation is flexible, and a first channel characteristic parameter and a first channel key generation algorithm may be selected based on an own capability, so that the selected first channel characteristic parameter and first channel key generation algorithm are better matched with a capability of the terminal device, thereby ensuring a generation rate and accuracy of the channel key.

In a possible implementation, the method further includes: determining the first channel characteristic parameter from the at least one channel characteristic parameter, and/or determining the first channel key generation algorithm from the at least one channel key generation algorithm. In a possible implementation, the method further includes: sending second information, where the second information is used to indicate at least one of the following: the first channel characteristic parameter; or the first channel key generation algorithm.

The second information is used to enable the network device to also determine the channel key based on the first channel characteristic parameter and/or the first channel key generation algorithm, so that the channel key determined by the network device matches the channel key determined by the terminal device, and the network device and the terminal device can use a matched channel key to decrypt messages sent to each other.

In a possible implementation, an algorithm for encrypting the first message is a first encryption algorithm, an algorithm for performing integrity protection on the first message is a first integrity protection algorithm, and an input parameter of the first encryption algorithm and the first integrity protection algorithm includes the first channel key; and the method further includes: receiving a system information block or a second message from the network device, where the system information block or the second message includes at least one of the following: a first encryption algorithm list, where the first encryption algorithm list includes at least one encryption algorithm; a first integrity protection algorithm list, where the first integrity protection algorithm list includes at least one integrity protection algorithm.

In a possible implementation, the method further includes: determining the first encryption algorithm from a first encryption algorithm list, and/or determining the first integrity protection algorithm from the first integrity protection algorithm list.

In a possible implementation, the method further includes: sending third information, where the third information is used to indicate at least one of the following: the first encryption algorithm; and the first integrity protection algorithm.

In a possible implementation, an algorithm for encrypting the first message is a first encryption algorithm, an algorithm for performing integrity protection on the first message is a first integrity protection algorithm, and an input parameter of the first encryption algorithm and the first integrity protection algorithm includes the first channel key; and the method further includes: sending a third message, where the third message includes at least one of the following: a second encryption algorithm list, where the second encryption algorithm list includes at least one encryption algorithm, and the at least one encryption algorithm includes the first encryption algorithm; or a second integrity protection algorithm list, where the second integrity protection algorithm list includes at least one integrity protection algorithm, and the at least one integrity protection algorithm includes the first integrity protection algorithm.

In a possible implementation, the method further includes: receiving fourth information from the network device, where the fourth information is used to indicate at least one of the following: the first encryption algorithm; or the first integrity protection algorithm.

In a possible implementation, the method further includes: sending first information, where the first information is used to indicate that a channel key generation capability is available, or that encryption and/or integrity protection are expected to be performed by using a channel key.

In a possible implementation, the first message is an RRC connection establishment complete message, an RRC resume complete message, or an RRC reestablishment complete message.

In a possible implementation, the second message is an RRC connection establishment message, an RRC connection resume message, or an RRC connection reestablishment message.

In a possible implementation, the third message is an RRC connection establishment request message, an RRC connection resume request message, or an RRC connection reestablishment request message.

In a possible implementation, the first reference signal and the second reference signal are within a coherence bandwidth; and a transmission time of the first reference signal and a transmission time of the second reference signal are within a coherent time.

According to a second aspect, this application provides a communication method, where an execution body of the method is a network device or a module or a chip in the network device. An example in which the network device is an execution body is used for description herein. The method includes: receiving a second reference signal from the terminal device; determining a second channel key based on the second reference signal; where the second channel key is used to encrypt and/or provide integrity protection for a message sent before a security mode is activated; receiving a first message from the terminal device, where the first message includes identification information of the terminal device; and decrypting and/or performing integrity verification on the second message based on the second channel key.

According to this method, the second channel key is generated based on the second reference signal from the terminal device in an initial access process, so that the first message that includes the identification information of the terminal device may be decrypted and/or integrity verified by using the second channel key before the security mode is activated, thereby resisting potential attacks. This enables the terminal device and the network device to complete exchange of important information in an initial access process, thereby improving security of data transmission.

In a possible implementation, the method further includes: sending first information, where the first information indicates a first resource; and receiving a second reference signal from the terminal device by using the first resource.

In a possible implementation, the method further includes: receiving first correction information from the terminal device, where the first correction information is used to correct the second channel key; correcting the first channel key based on the first correction information to obtain a corrected second channel key; and the corrected second channel key is used to perform encryption and/or integrity protection on a message sent before the security mode is activated.

In a possible implementation, the first information is located in a system information block, or the first information is located in a random access response message in a random access process, or the first information is located in a second message.

In a possible implementation, the method further includes: sending a first reference signal and second correction information, where the second correction information is determined based on the second channel key, the first reference signal is used to determine the first channel key, and the second correction information is used to correct the first channel key.

In a possible implementation, the determining a second channel key based on the second reference signal includes: determining a second channel measurement result based on the second reference signal; determining a value of the first channel characteristic parameter based on the second channel measurement result; and determining the second channel key based on the value of the first channel characteristic parameter and a first channel key generation algorithm.

In a possible implementation, the method further includes: sending a system information block or a second message, where the system information block or the second message includes at least one of the following: a channel characteristic parameter list, where the channel characteristic parameter list includes at least one channel characteristic parameter; or a channel key generation algorithm list, where the channel key generation algorithm list includes at least one channel key generation algorithm.

In a possible implementation, the method further includes: receiving second information from the terminal device, where the second information indicates at least one of the following: the first channel characteristic parameter; or the first channel key generation algorithm.

In a possible implementation, an algorithm for encrypting the first message is a first encryption algorithm, an algorithm for integrity protecting the first message is a first integrity protection algorithm, and an input parameter of the first encryption algorithm and the first integrity protection algorithm includes the first channel key; and the method further includes: sending a system information block or a second message, where the system information block or the second message includes at least one of the following: a first encryption algorithm list, where the first encryption algorithm list includes at least one encryption algorithm; or a first integrity protection algorithm list, where the first integrity protection algorithm list includes at least one integrity protection algorithm.

In a possible implementation, the method further includes: receiving third information from the terminal device, where the third information is used to indicate at least one of the following: the first encryption algorithm; or the first integrity protection algorithm.

In a possible implementation, an algorithm for encrypting the first message is a first encryption algorithm, an algorithm for integrity protecting the first message is a first integrity protection algorithm, and an input parameter of the first encryption algorithm and the first integrity protection algorithm includes the first channel key; and the method further includes: receiving a third message from the terminal device, where the third message includes at least one of the following: a second encryption algorithm list, where the second encryption algorithm list includes at least one encryption algorithm, and the at least one encryption algorithm includes the first encryption algorithm; or a second integrity protection algorithm list, where the second integrity protection algorithm list includes at least one integrity protection algorithm, and the at least one integrity protection algorithm includes the first integrity protection algorithm.

In a possible implementation, the method further includes: sending fourth information, where the fourth information indicates at least one of the following: the first encryption algorithm, or the first integrity protection algorithm.

In a possible implementation, the method further includes: receiving first information from the terminal device, where the first information is used to indicate that an entity has a channel key generation capability, or expects to use a channel key for encryption and/or integrity protection.

In a possible implementation, the first message is a radio resource control RRC connection establishment complete message, an RRC resume complete message, or an RRC reestablishment complete message.

In a possible implementation, the second message is an RRC connection establishment message, an RRC resume message, or an RRC reestablishment message.

In a possible implementation, the third message is an RRC connection establishment request message, an RRC resume request message, or an RRC reestablishment request message.

In a possible implementation, the first reference signal and the second reference signal are located within a coherence bandwidth; and a transmission time of the first reference signal and a transmission time of the second reference signal are within a coherence time.

According to a third aspect, this application further provides a communications apparatus, where the communications apparatus can implement any method provided in any one of the first aspect to the second aspect. The communications apparatus may be implemented by hardware, or may be implemented by hardware executing corresponding software. The hardware or software includes one or more units or modules corresponding to the foregoing functions.

In a possible implementation, the communication apparatus includes a processor, where the processor is configured to support the communication apparatus in performing a corresponding function of the network device, the terminal device, or the core network device in the foregoing methods. The communication apparatus may further include a memory, where the memory may be coupled to the processor, and the memory stores program instructions and data necessary for the communication apparatus. Optionally, the communication apparatus further includes an interface circuit, where the interface circuit is configured to support communication between the communication apparatus and a device such as a terminal device.

In a possible implementation, the communication apparatus includes corresponding functional modules, which are configured to implement the steps in the foregoing methods. The functions may be implemented by hardware, or may be implemented by hardware executing corresponding software. The hardware or software includes one or more modules corresponding to the foregoing functions.

In a possible implementation, a structure of the communication apparatus includes a processing unit and a communication unit, where these units may perform corresponding functions in the foregoing method examples. For details, refer to the descriptions in the method provided in any one of the first aspect to the second aspect. Details are not described herein again.

According to a fourth aspect, a communication apparatus is provided, including a processor and an interface circuit. The interface circuit is configured to receive a signal from another communication apparatus outside the communication apparatus and transmit the signal to the processor, or send a signal from the processor to another communication apparatus outside the communication apparatus. The processor implements the function module of the method in any one of the possible implementations of the first aspect to the second aspect by using a logic circuit or by executing a computer program or instructions. Optionally, the communication apparatus further includes a memory, where the memory is configured to store a computer program or instructions.

According to a fifth aspect, a computer-readable storage medium is provided, wherein the computer-readable storage medium stores a computer program or instructions, and when the computer program or instructions are executed by a processor, the method in any one of the possible implementations of the first aspect to the second aspect is implemented.

According to a sixth aspect, a computer program product storing instructions is provided, wherein when a computer reads and executes the computer program product, the method in any one of the possible implementations of the first aspect to the second aspect is implemented.

According to a seventh aspect, a circuit is provided, which is configured to perform the method in any one of the possible implementations of the first aspect to the second aspect, where the circuit may include a chip circuit. Optionally, the circuit may be further coupled to a memory.

According to an eighth aspect, a chip or a chip system is provided. The chip includes a processor, where when the processor executes a computer program or instructions, the processor is configured to implement the method in any one of the possible implementations of the first aspect to the second aspect. Optionally, the chip may further include a memory. The chip may be constituted by the chip, or may include the chip and other discrete components. Optionally, the chip system includes at least one of a baseband system on a chip (system-on-a-chip, SOC) chip and a radio frequency (Radio Frequency) chip, or the chip system includes at least one of a baseband chip and a radio frequency chip set.

According to a ninth aspect, a communication apparatus is provided, including a processor, where the processor implements, by using a logic circuit or by executing a computer program or instructions, the method in any possible implementation of any one of the first aspect to the second aspect.

According to a tenth aspect, a communication apparatus is provided, including units or modules configured to perform the method in any possible implementation of any one of the first aspect to the second aspect.

According to an eleventh aspect, an embodiment of this application further provides a communications system. The communications system includes a terminal device configured to implement the method in any one of the first aspect or any possible implementation of the first aspect, and a network device configured to implement the method in any one of the second aspect or any possible implementation of the second aspect.

### Brief Description of the Drawings

FIG. 1 is a schematic diagram of an architecture of a network device according to an embodiment of this application;
FIG. 2 is a schematic diagram of a pseudo base station according to an embodiment of this application;
FIG. 3 is a schematic diagram of a man-in-the-middle attack according to an embodiment of this application;
FIG. 4 is a schematic diagram of a network architecture applicable to an embodiment of this application;
FIG. 5 is a schematic flowchart of a key generation method according to an embodiment of this application;
FIG. 6 is a schematic diagram of an air interface integrity protection procedure according to an embodiment of this application;
FIG. 7 is a schematic flowchart of an air interface encryption procedure according to an embodiment of this application;
FIG. 8 is a schematic flowchart of an initial access procedure according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic structural diagram of a communications apparatus according to an embodiment of this application;
FIG. 13 is a schematic structural diagram of a communications apparatus according to an embodiment of this application;
FIG. 14 is a schematic structural diagram of a communications apparatus according to an embodiment of this application.

### Specific Implementation

The technical solutions in embodiments of this application are described below with reference to the accompanying drawings in embodiments of this application. It is clear that the described embodiments are merely some rather than all of the embodiments of this application. In this application, terms such as "first" and "second" and corresponding term labels are intended to distinguish between similar objects, but are not necessarily intended to describe a specific order or sequence. It should be understood that such terms so used are interchangeable in appropriate circumstances, and this is merely a distinction used when describing objects of a same attribute in embodiments of this application. In addition, the terms "include", "have", and any other variant thereof are intended to cover a non-exclusive inclusion, so that a process, method, system, product, or device that includes a series of units is not necessarily limited to those units, but may include other units not expressly listed or inherent to such a process, method, system, product, or device. The methods and apparatuses provided in the embodiments of this application are based on a same or similar technical concept. Because the methods and the apparatuses have similar principles for solving problems, the implementation of the apparatuses and the methods may be mutually referenced, and repeated parts are not described again.

The method provided in the embodiments of this application may be applied to various types of mobile communication systems, for example, may be an Internet of Things (internet of things, IoT), a Narrowband Internet of Things (narrow band internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), or a hybrid architecture of LTE and NR, or may be a 6G communication system or a new communication system that emerges in future communication development, or the like. The communication system may further include a machine to machine (machine to machine, M2M) network, a machine type communication (machine type communication, MTC) network, or another network.

Hereinafter, some terms used in the embodiments of this application are first explained and described to facilitate understanding by a person skilled in the art.

In the embodiments of this application, the network device may be a device in a wireless network, and the network device may also be referred to as a network apparatus, a radio access network (RAN) device, or an access network device. For example, the network device may be a radio access network (radio access network, RAN) node that connects a terminal device to a wireless network, and may also be referred to as an access network device. The network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation NodeB in a 6th generation (6th generation, 6G) mobile communication system, a base station in a future mobile communication system, an access node in a wireless fidelity (wireless fidelity, WiFi) system, or the like; or may be a module or unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, a micro base station, an indoor station, a relay node, a donor node, or the like. This application does not limit the specific technologies or specific device forms used by the network device.

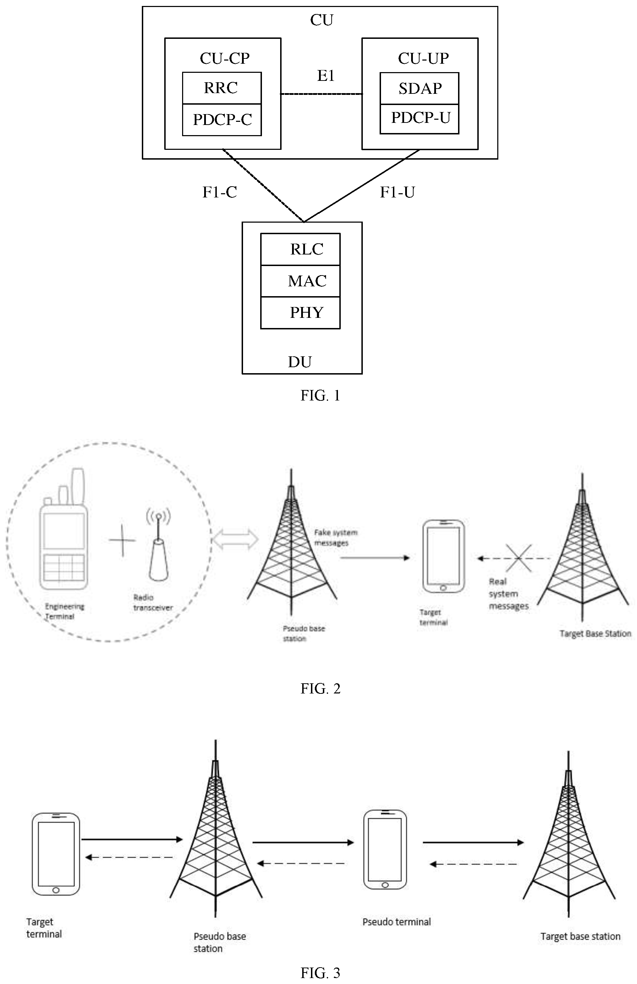

As shown in FIG.1, in some implementations, a network device may include a centralized unit (CU) and a distributed unit (DU). In a RAN device that includes a CU node and a DU node, the protocol layers of the gNB in the NR system are split, where the functions of some protocol layers are centrally controlled by the CU, while the functions of the remaining or all protocol layers are distributed in the DU, and the CU centrally controls the DU. Furthermore, the CU may be further divided into a control plane (CU-CP) and a user plane (CU-UP). The CU-CP is responsible for control plane functions, mainly including radio resource control (radio resource control, RRC) and the packet data convergence protocol (packet data convergence protocol, PDCP) corresponding to the control plane (i.e., PDCP-C). PDCP-C is mainly responsible for encryption and decryption, integrity protection, and data transmission of control plane data. The CU-UP is responsible for user plane functions, mainly including the service data adaptation protocol (service data adaptation protocol, SDAP) and the PDCP corresponding to the user plane (i.e., PDCP-U). The SDAP is mainly responsible for processing data from the core network and mapping flows to bearers. The PDCP-U is mainly responsible for encryption and decryption, integrity protection, header compression, sequence number maintenance, and data transmission on the user plane. The CU-CP and the CU-UP are connected through an E1 interface. The CU-CP represents the gNB connecting to the core network through an NG interface, and connects to the DU through the control plane of the F1 interface (i.e., F1-C). The CU-UP connects to the DU through the user plane of the F1 interface (i.e., F1-U). Of course, another possible implementation is that the PDCP-C is also located in the CU-UP.

It may be understood that CUs (including a CU-CP or a CU-UP) or DUs may also have different names in different systems, but a person skilled in the art may understand their meanings. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, this application uses the CU, the CU-CP, the CU-UP, and the DU as examples for description. The network device may further include an active antenna unit (active antenna unit, AAU). The CU implements some functions of the gNB, and the DU implements some functions of the gNB. For example, the CU is responsible for processing non-real-time protocols and services, and implements functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a centralized unit control plane (CU-CP) node and a centralized unit user plane (CU-UP) node. The CU-CP is responsible for control plane functions, and the CU-UP is responsible for user plane functions.

The terminal device in the embodiments of this application may be a wireless terminal apparatus that can receive scheduling information and indication information of a network apparatus. The terminal device may be referred to as a terminal apparatus, or may be referred to as user equipment (user equipment, UE), a terminal, a mobile station (mobile station, MS), a mobile terminal (mobile terminal, MT), or the like. The terminal apparatus may be a device that includes a wireless communication function (providing voice/data connectivity to a user). For example, a handheld device with a wireless connection function, an in-vehicle device, or an in-vehicle module. Currently, examples of some terminal apparatuses are: a mobile phone (mobile phone), a tablet computer, a notebook computer, a palmtop computer, a mobile Internet device (mobile internet device, MID), a wearable device, a virtual reality (virtual reality, VR) device, and an augmented reality (augmented reality). AR) device, a wireless terminal in industrial control, a wireless terminal in the Internet of Vehicles, a wireless terminal in self driving, a wireless terminal in remote medical surgery, a wireless terminal in a smart grid, and transportation a wireless terminal in transport safety, a wireless terminal in a smart city, a wireless terminal in a smart home, or a device-to-device communication, D2D) terminal apparatus, vehicle to everything (V2X) communication terminal apparatus, intelligent vehicle, vehicle-based system (or telematics box, T-box), a machine-to-machine/machine type communications (machine-to-machine /machine-type communications, M2M/MTC) terminal apparatus, an Internet of Things (Internet of things, IoT) terminal apparatus, and the like. For example, the terminal apparatus may be an in-vehicle device, an entire vehicle device, an in-vehicle module, a vehicle, an on-board unit (on board unit, OBU), a roadside unit (roadside unit, RSU), a T-box, a system on chip (system on chip, SOC), or the like. The chip or the SOC may be installed in a vehicle, an OBU, an RSU, or a T-box. A wireless terminal in industrial control may be a camera, a robot, or the like. Wireless terminals in the smart home can be TVs, air conditioners, floor sweepers, speakers, and set-top boxes. Alternatively, the terminal device may be a V2X device, for example, a smart car (smart car or intelligent car), a digital car (digital car), or an unmanned car (unmanned car or driverless car or pilotless car or automobile), an automatic car (self-driving car or autonomous car), a pure electric vehicle (pure EV or battery EV), a hybrid electric vehicle (HEV), a range extended EV, REEV), plug-in hybrid vehicles (PHEV), new energy vehicles (new energy vehicles), road site units (RSUs). Alternatively, the terminal device may be a device in device to device (device to device, D2D) communication, for example, an electricity meter or a water meter. In addition, in this embodiment of this application, the terminal device may alternatively be a terminal device in an IoT system. The IoT is an important part of future information technology development. A main technical feature of the IoT is that articles are connected to a network by using a communications technology, so as to implement an intelligent network of man-machine interconnection and object-to-object interconnection.

In this application, the predefined content usually refers to information that is defined by a standard, does not need to be configured by another device, and is information that is recorded/written in advance in hardware and/or software of the terminal apparatus, or may be understood as information that cannot be changed by a network apparatus or another terminal apparatus. The preconfigured content usually refers to information that is recorded/written in advance in hardware and/or software of the terminal apparatus, which is determined by an equipment vendor at the factory, and which may be changed by software or hardware.

The (pre)configuration may be classified into (pre)configuration of a network apparatus and (pre)configuration of a terminal apparatus. If the (pre)configuration is (pre)configuration of the network apparatus, the (pre)configuration may be performed by using a system information block (system information block, SIB) or RRC signaling. If the (pre)configuration is the (pre)configuration of the terminal apparatus, the (pre)configuration may be performed based on PC5-RRC signaling.

Channel measurement: means that a receive end measures a signal of a transmit end to obtain various parameters such as a receive power, a phase, an envelope amplitude, and a signal-to-noise ratio of the signal, where these parameters may represent a transmission characteristic of a channel between the receive end and the transmit end.

Pseudo base station attack: This refers to a situation where a network attacker places an illegal base station within the coverage area of a target base station. The pseudo base station can force nearby target terminals to perform cell reselection, location updates, and cell handovers, thereby deceiving the terminals or providing them with false information, with the aim of spreading viruses or committing online fraud.

For example, as shown in FIG.2, a pseudo base station may be composed of an engineering terminal (e.g., a computer/phone), cables, and a wireless transceiver, among other components. By masquerading as a base station of a mobile communications operator, it can deceive terminals and launch attacks. Pseudo base station attacks can be carried out by forging system messages, which then override the genuine system messages in the network, causing the target terminal to reject services from the target base station. Additionally, a pseudo base station can trick terminals into initiating network registration or location update requests to it, thereby attracting the target terminal to camp on the pseudo base station and extracting the terminal's information. In this case, the terminal loses connection with the normal network and cannot access network services. Pseudo base stations can also exchange information with terminals, such as sending fraudulent text messages, malicious web links, or spam messages to the terminals.

Pseudo base stations may also intercept communication data between the target base station and the terminal, thereby eavesdropping on users' private data. While launching deceptive attacks on the terminal, pseudo base stations can also interfere with normal communication between the network and the terminal, thereby affecting network performance.

Man-in-the-middle attack: This refers to a scenario where a pseudo base station, combined with a pseudo terminal, forwards encrypted data between the terminal and the network in a relayed manner, and when there is no integrity protection, the data is tampered with to carry out the attack.

For example, as shown in FIG.3, in the uplink where the target terminal transmits data to the target base station, the pseudo base station receives the communication data from the target terminal and transparently forwards it to the target base station through the pseudo terminal. Correspondingly, in the downlink where the target base station transmits data to the target terminal, the pseudo terminal receives the communication data from the legitimate base station, and after the pseudo base station tampers with the received data, the data is then transmitted to the target terminal.

During this process, the target terminal and the target base station find it difficult to detect the presence of the pseudo base station and the pseudo terminal. If the target terminal and the target base station do not implement integrity protection for the communication data, attacks such as data tampering or packet loss may occur.

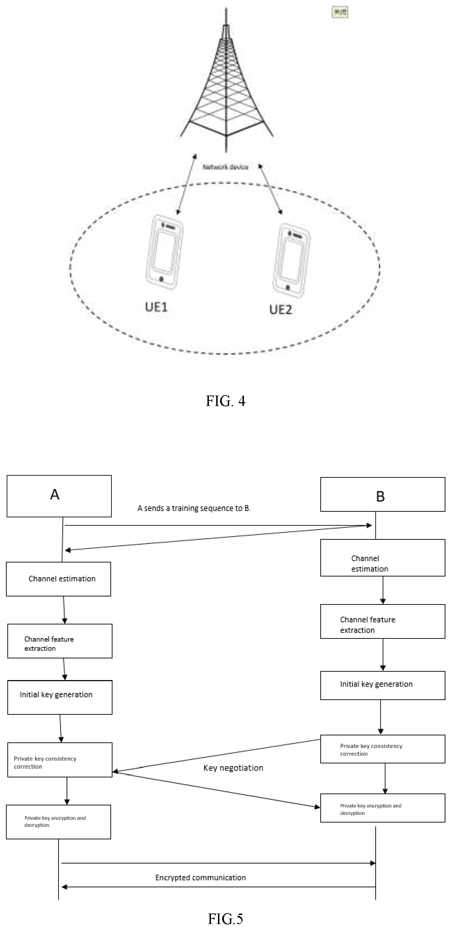

As shown in FIG.4, a schematic diagram of a network architecture provided by an embodiment of this application is illustrated. This network architecture may include a network device and at least one terminal device, for example, including UE1 and UE2. The aforementioned network architecture may be an architecture in an LTE system, an architecture in an NR system, a hybrid architecture of LTE and NR, or an architecture in a 6G or a new communication system that may emerge in future communication development. This application does not limit this.

To prevent pseudo base station attacks and man-in-the-middle attacks, data between network devices and terminal devices may be encrypted or integrity protected through a channel key. In this application, the channel key may be generated by the network device and the terminal device respectively using a channel key generation technology. Channel key generation technology: In a time division duplex (time division duplex, TDD) communication system, the communication parties transmit and receive data during different time periods, but the uplink and downlink transmissions use the same frequency. Uplink and downlink signals experience similar environments in the wireless channel and exhibit short-term reciprocity. Therefore, an encryption key may be generated by extracting common information from the shared channels of the communication parties. Based on the short-term reciprocity of the channel, the channel characteristics measured by the communication parties at the same moment are the same, which can serve as a random source for generating the key. In addition, since the communication channel changes over time, the obtained channel key is automatically updated, and the key update is unpredictable to eavesdroppers.

For example, FIG. 5 shows a schematic flowchart of a key generation method based on a channel measurement result. A in the FIG.may be the terminal device in FIG. 4, and B in the FIG.may be the network device in FIG. 4. Alternatively, A in the FIG.may be the network device in FIG. 4, and B in the FIG.may be the terminal device in FIG. 4. A and B each generate a key based on the channel measurement result, which mainly includes a process of channel estimation, channel feature extraction, initial key generation, key consistency correction, and key encryption and decryption.

In a channel estimation phase, A sends a training sequence to B. For example, the training sequence may be specifically a demodulation reference signal (Demodulation Reference Signal, DMRS). B receives the training sequence and performs channel estimation to obtain a channel measurement result Y _{B}. B sends the training sequence to A, and A receives the training sequence and performs channel estimation to obtain a channel measurement result Y _{A}. Because the channel does not change within a channel coherence time, theoretically, Y _{A} =Y _{B}.

The channel measurement result includes measurement values of various channel characteristics obtained in a measurement process of the training sequence. For example, the training sequence sent by A is sent to B in a form of a radio signal. B measures the radio signal corresponding to the training sequence, and can obtain measurement values such as a received signal power and a received signal phase of the radio signal. Therefore, the channel measurement result may include measurement values of at least one of the following channel characteristics: received signal power (Received Signal Strength, RSS), received signal envelope, channel impulse response (channel impulse response, CIR), and received signal phase. The channel measurement result may further include other information, for example, may further include a signal to noise ratio (signal noise ratio, SNR), or a signal to interference plus noise ratio (signal to interference plus noise ratio, SINR), where the signal to noise ratio may be referred to as a signal to noise ratio (SNR) for short.

After obtaining the channel measurement result, A and B may separately use a same channel characteristic to generate the initial key. A side A is used as an example. When the channel feature in the channel measurement result Y_{A} is extracted as the RSS, A may determine a string of bit values based on comparison between the RSS and the threshold, and use a string of bit values obtained after multiple comparisons as the initial key KA. Correspondingly, B compares the RSS in the channel measurement result Y_{B} with the threshold, and obtains the initial key YB by using the same method. Theoretically, Y_{A}=Y_{B}. However, due to an actual problem such as a measurement error, a finally obtained initial key KA is not necessarily equal to a KB. Therefore, key consistency correction further needs to be performed, and different bits in the initial key KA and KB need to be checked and modified. Finally, A and B can obtain the same bit stream GA and GB, and use the same bit stream GA and GB as the encryption key to implement encryption or integrity protection between A and B.

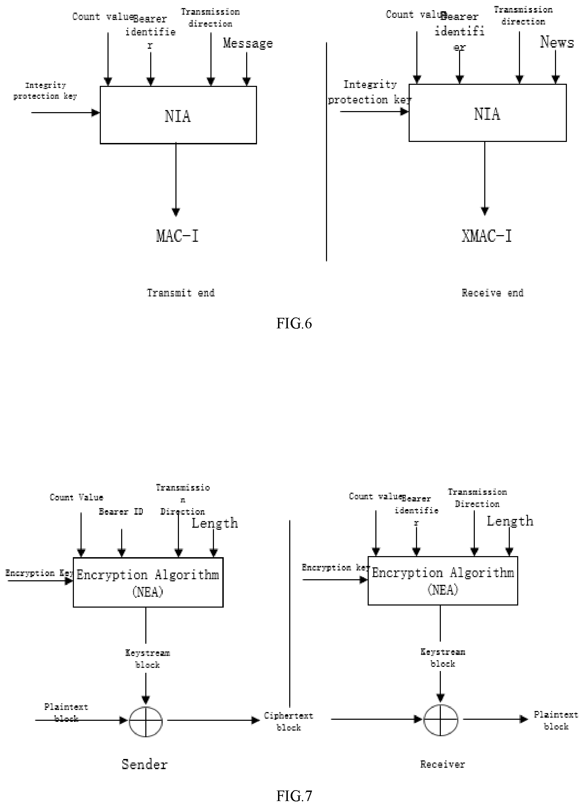

Air interface integrity protection: The transmit end obtains a message authentication code for integrity (message authentication code for integrity, MAC-I) by performing a regular operation on the parameters that change regularly and the transmitted data. When receiving data, the receive end uses the same parameter and the same algorithm to obtain an expected message integrity authentication code (expected message authentication code for integrity, XMAC-I), and checks the MAC-I and the XMAC-I to determine whether the received data is complete, thereby protecting data integrity. As shown in FIG. 6, an example in which the integrity protection algorithm is an NR integrity protection algorithm (NR integrity protection algorithm, NIA) is used. An input parameter of the NIA may include an integrity protection key KEY, a count value (COUNT) of a PDCP packet, a bearer identifier, a transmission direction (Direction), and a to-be-transmitted message (namely, a message). The sending end appends the MAC-I to the message when sending the message. In the same manner, the receiving end calculates the XMAC-I of the received message and verifies the integrity of the message by comparing the MAC-I and XMAC-I. The transmission direction is uplink or downlink. For example, 0 indicates that the transmission direction is uplink, and 1 indicates that the transmission direction is downlink.

The encryption protection process over the air interface is similar to the integrity protection process. As shown in FIG.7, taking the NR Encryption Algorithm (NEA) as an example, the input parameters of the air interface encryption algorithm include the encryption key (KEY), the count value (COUNT) of the PDCP packet, the bearer identifier, the transmission direction (DIRECTION), and the length (LENGTH) of the required keystream. During encryption, the transmitting end generates a keystream block (KEYSTREAMBLOCK) based on the input parameters. This keystream block is then XORed with the plaintext block (PLAINTEXTBLOCK) to produce the ciphertext block (CIPHERTEXTBLOCK). At the receiving end, the same keystream block is generated using the same input parameters, and the ciphertext block is XORed to recover the plaintext block.

Initial access procedure: When a terminal device transitions from the RRC idle state or RRC inactive state to the RRC connected state, it initiates a random access procedure (either a 2-step or a 4-step random access) to the base station, thereby triggering the initial access procedure.

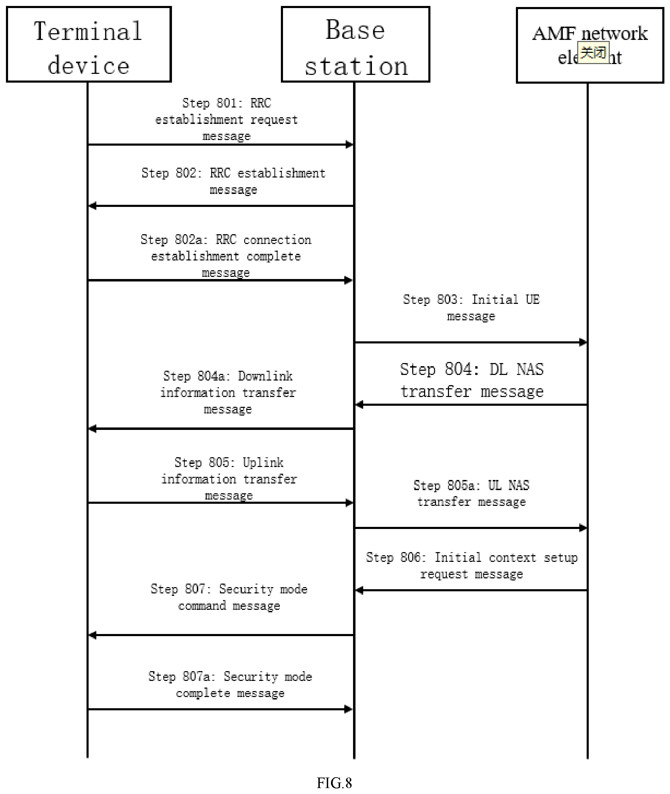

For example, as shown in FIG.8, the initial access process may include the following steps:
Step 801: The terminal device sends an RRC setup request (RRCSetupRequest) message to the base station.

In this process, the terminal device sends an RRC connection establishment request message to the base station while in the RRC idle state or RRC inactive state.

Step 802: The base station sends an RRC connection setup (RRCSetup) message to the terminal.

When the terminal device receives the RRC connection establishment message, the random access is completed, and the device transitions to the RRC connected state.

Step 802a: The terminal device sends an RRC setup complete (RRCSetupComplete) message to the base station.

In this process, the RRC setup complete message includes a concealed subscriber identifier (subscription concealed identifier, SUCI). The SUCI is obtained by encrypting the permanent subscriber identifier (subscription permanent identifier, SUPI) using an asymmetric algorithm by the terminal device. Therefore, its security level entirely depends on the asymmetric encryption algorithm and key length used by the terminal device. Once an attacker obtains the SUCI, they might be able to crack it within a limited time using a quantum computer and the corresponding cracking algorithm, thereby obtaining the corresponding SUPI and using the SUPI to track the terminal device or perform other illegal activities.

Step 803: The base station sends an Initial UE message to the access and mobility management function (AMF) network element.

Step 804: The AMF network element sends a downlink (downlink, DL) non-access stratum (non access stratum, NAS) transport (transport) message to the base station.

Step 804a: The base station sends a downlink information transfer (DLInformationTransfer) message to the terminal device.

Step 805: The terminal device sends an uplink (uplink, UL) information transfer (ULInformationTransfer) message to the base station.

Step 805a: The base station sends an uplink non-access stratum transport (UL NAS transport) message to the AMF.

Step 806: The AMF network element sends an initial context setup request (Initial Context SetupRequest) message to the base station.

The initial context setup request message may include context data of the terminal device, PDU session context, security key, radio capabilities of the terminal, security capabilities, and the like. After receiving the initial context setup request message, the base station initiates the security mode.

Step 807: The base station sends a security mode command (securitymodecommand) message to the terminal device.

Among them, the security mode command message includes a security key configured by the core network, which may be used for encryption and integrity protection.

Step 807a: The terminal device sends a security mode complete (securitymodecomplete) message to the base station.

This means that the base station initiates the security mode and sends parameters such as the encryption key and/or the air interface integrity protection key configured for the terminal by the core network to the terminal.

After the message initiation at step 807a, the base station and the terminal device initiate a security mode. Once the security mode is initiated, the communication between the base station and the terminal device will be encrypted and integrity protected using a security key.

From the above process, it can be understood that before the security mode is initiated, the messages between the base station and the terminal device are not encrypted or integrity protected, which allows other devices to obtain information transmitted prior to the initiation of the security mode. For example, in step 802a, an attacker can obtain the SUCI from the RRC connection setup complete message. Therefore, how to enhance the security of communication between the terminal device and the base station before initiating the security mode is an urgent issue that needs to be addressed.

When the method provided in this application is applied to the network architecture in FIG.4, the functions of the network device may also be performed by a module (such as a chip) within the network device, or by a control subsystem that includes the functions of the network device. The control subsystem here that includes the functions of the network device may be a control center in the aforementioned application scenarios such as smart grids, industrial control, intelligent transportation, or smart cities. The functions of the terminal device may also be performed by a module (such as a chip or a modem) within the terminal device, or by an apparatus that includes the functions of the terminal device.

The network architecture and service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

It may be understood that this application does not impose a particular limitation on a specific structure of an entity executing the method provided in embodiments of this application. The entity may be a module that can be applied to a terminal device or a network device, provided that a program that records code of the method provided in embodiments of this application can run on the entity to perform communication according to the method provided in embodiments of this application. The following uses interaction between a terminal device and a network device as an example for description.

In this application, before the security mode is activated, the network device and the terminal device may send reference signals to each other, and the network device and the terminal device may each generate a channel key based on the received reference signal. In this way, before the security mode is activated, the channel key may be used to encrypt and/or perform integrity protection on a to-be-sent message, thereby improving security of data transmission.

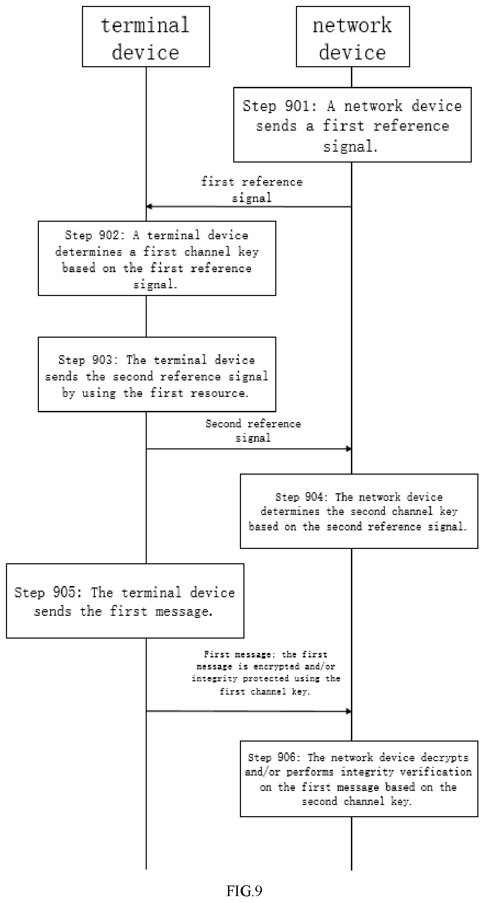

As shown in FIG. 9, FIG. 9 is a schematic flowchart of a communication method according to an embodiment of this application. The method includes the following steps:
Step 901: A network device sends a first reference signal.

Correspondingly, the terminal device receives the first reference signal.

Herein, that the network device sends the first reference signal may mean that the network device outputs the first reference signal. For example, in a possible implementation, the network device may output the first reference signal to a radio frequency chip through a baseband processor, and then the radio frequency chip of the network device modulates the first reference signal and sends it through an air interface. The specific process is not limited in this application. For the network device to send other information or messages, reference may also be made to the description herein.

In this application, the first reference signal may be a DMRS, or may be a reference signal such as a synchronization signal and PBCH block (Synchronization Signal and PBCH Block, SSB), or the like. The type of the first reference signal is not limited in this application.

Step 902: The terminal device determines the first channel key based on the first reference signal.

The first channel key is used to perform encryption and/or integrity protection on a message sent before the security mode is activated.

For example, the terminal device determines the first channel measurement result based on the first reference signal, and determines the value of the first channel characteristic parameter based on the first channel measurement result. The terminal device may determine the first channel key based on the value of the first channel characteristic parameter and the first channel key generation algorithm. For example, the first channel measurement result includes at least one of a received signal envelope, a received signal phase, a received signal power, or a channel impulse response (channel impulse response, CIR) of the first reference signal. The terminal device may use one of the items as the first channel characteristic parameter, for example, use the received signal power as the first channel characteristic parameter. The terminal device quantizes the value of the first channel characteristic parameter (for example, the value of the received signal power) according to the first channel key generation algorithm, to obtain L quantized bits, and uses these L bits as the first channel key. L is an integer greater than 1, for example, L is 128 or 256.

The first channel characteristic may be any one of the following: a received signal envelope of the reference signal, a channel impulse response (channel impulse response, CIR) of the reference signal, a received signal power of the reference signal, or a received signal phase of the reference signal.

How the terminal device determines the first channel characteristic parameter and the first channel key generation algorithm used to generate the first channel key is not limited in this application. For example, in implementation 1, the first channel characteristic parameter and the first channel key generation algorithm are preset. For example, the preset first channel characteristic parameter is the received signal power, and the preset first channel key generation algorithm is a quantization algorithm. In this implementation, after determining the first channel measurement result based on the first reference signal, the terminal device may directly generate the first channel key based on the preset first channel characteristic parameter and the first channel key generation algorithm, thereby determining the channel key as early as possible, and the channel key generation efficiency is relatively high.

Implementation 2: The network device may indicate at least one of the following to the terminal device:
a first channel characteristic parameter list, where the first channel characteristic parameter list includes at least one channel characteristic parameter; and a first channel key generation algorithm list, where the first channel key generation algorithm list includes at least one channel key generation algorithm.

For example, the network device may indicate the first channel characteristic parameter list and/or the first channel key generation algorithm list by using a system information block or a second message, where the second message is a message before security mode is activated. For example, the second message is an RRC setup (RRCSetup) message, an RRC resume (RRCResume) message, or an RRC reestablishment (RRCReestablishment) message.

The terminal device may determine the first channel characteristic parameter from the at least one channel characteristic parameter included in the channel characteristic parameter list, and/or determine the first channel key generation algorithm from the at least one channel key generation algorithm included in the first channel key generation algorithm list.

This implementation is flexible, and the terminal device may select the first channel characteristic parameter and the first channel key generation algorithm based on the capability of the terminal device, so that the selected first channel characteristic parameter and first channel key generation algorithm are better matched with the capability of the terminal device, thereby ensuring a generation rate and accuracy of the channel key.

In this implementation, the terminal device may further send second information to the network device, where the second information is used to indicate the first channel characteristic parameter and/or the first channel key generation algorithm, so that the network device may also determine the channel key based on the first channel characteristic parameter and/or the first channel key generation algorithm, thereby ensuring that the channel key determined by the network device matches the channel key determined by the terminal device, and the network device and the terminal device can use a matched channel key to decrypt messages sent to each other.

In Implementation 3, the terminal device may send the channel characteristic parameter and/or the channel key generation algorithm supported by the terminal device to the network device. For example, the terminal device may send a third message to the network device, where the third message includes at least one of the following: a second channel characteristic parameter list, where the second channel characteristic parameter list includes at least one channel characteristic parameter; or a second channel key generation algorithm list, where the second channel key generation algorithm list includes at least one channel key generation algorithm.

The third message is a message before the security mode is activated. For example, the third message is an RRC setup request (RRCSetupRequest) message, an RRC resume request (RRCResumeRequest) message, or an RRC reestablishment request (RRCReestablishmentRequest) message.

The network device may determine the first channel characteristic parameter from the at least one channel characteristic parameter included in the second channel characteristic parameter list, determine the first channel key generation algorithm from the at least one channel key generation algorithm included in the second channel key generation algorithm list, and indicate the first channel characteristic parameter and/or the first channel key generation algorithm to the terminal device.

In this implementation, the first channel characteristic parameter and/or the first channel key generation algorithm indicated by the network device are both supported by the terminal device, so that the terminal device can determine the channel key based on the foregoing parameters, thereby achieving flexibility.

Step 903: The terminal device sends a second reference signal through the first resource.

Correspondingly, the network device receives the second reference signal. The second reference signal may be a channel state information reference signal (channel state information reference signal, CSI-RS), or may be a reference signal such as an SRS, and the type of the second reference signal is not limited in this application.

Herein, that the terminal device sends a second reference signal may mean that the terminal device outputs the second reference signal. For example, in a possible implementation, the terminal device may output the second reference signal to a radio frequency chip through a baseband chip, and then the radio frequency chip of the terminal device modulates the second reference signal and sends it through an air interface. A specific process is not limited in this application. For sending other information or messages by the terminal device, reference may also be made to the description herein.

In an implementation, the first resource is preset. In this way, the terminal device does not need to wait for resource scheduling by the network device before sending the second reference signal, thereby reducing the delay of the reference signal and also reducing the overhead of resource indication.

In another implementation, the first resource is configured by the network device. For example, the network device sends first information to the terminal device, where the first information indicates the first resource. This can make sending of the second reference signal more flexible, and the first resource can be scheduled for the terminal device according to a requirement of the terminal device.

The network device may add the first information to any message before the security mode is activated. For example, the first information may be located in any of the following messages: a system information block (System Information Block, SIB), for example, SIB1; a random access response message in a random access process; or a second message.

In this application, the first reference signal and the second reference signal are located within a coherence bandwidth; and a transmission time of the first reference signal and a transmission time of the second reference signal are within a coherent time. This can ensure reciprocity between an uplink channel and a downlink channel, so that a channel key determined by the network device based on the second reference signal is similar to a channel key determined by the terminal device based on the first reference signal.

In the foregoing procedure, an order of step 901 and step 903 is not limited, and step 903 may alternatively be performed before step 901. The foregoing is merely an example for description, and other cases are not described in detail.

Implementation 1: If step 901 is performed before step 903, the terminal device first determines the first channel key based on the first reference signal, determines the first correction information based on the first channel key, and sends the first correction information to the network device. In this implementation, the terminal device may send the first correction information by using the first resource, that is, the terminal device may send the second reference signal and the first correction information by using the first resource.

After generating the second channel key based on the second reference signal of the terminal device, the network device corrects the second channel key based on the first correction information, to obtain the corrected second channel key. The corrected second channel key is the same as the first channel key, so that a message sent by the network device can be decrypted by the terminal device, and a message sent by the terminal device can be decrypted by the network device.

Implementation 2: If step 903 is performed before step 901, the network device first determines the second channel key based on the second reference signal, determines the second correction information based on the second channel key, and sends the second correction information to the terminal device. In this implementation, the network device may send the second correction information when sending the first reference signal, or the network device sends the first reference signal and the second correction information on a same resource.

After generating the first channel key based on the first reference signal of the network device, the terminal device corrects the first channel key based on the second correction information, to obtain the corrected first channel key. The corrected first channel key is the same as the second channel key, thereby ensuring that the network device and the terminal device can decrypt a message sent by each other.

Step 904: The network device determines the second channel key based on the second reference signal.

The second channel key is used to encrypt and/or provide integrity protection for a message sent before the security mode is activated.

The network device may also determine the second channel key based on the first channel characteristic parameter and the first channel key generation algorithm. A specific process is not described in detail again.

Step 905: The terminal device sends a first message, where the first message is encrypted and/or integrity protected by using the first channel key.

Correspondingly, the network device receives the first message from the terminal device.

The first message may be a message before the security mode is activated. For example, the first message is an RRC setup complete (RRCSetupComplete) message, an RRC resume complete (RRCResumeComplete) message, or an RRC reestablishment complete (RRCReestablishmentComplete) message. The first message includes identification information of the terminal device, where the identification information may be an SUCI or the like. By using this method, because the first message that includes the identification information of the terminal device is encrypted and/or integrity protected before the security mode is activated, the identification information can be prevented from being obtained by a third-party device, thereby improving security of data transmission.

Optionally, the first message may also be a message after the security mode is activated. This is not limited in this application.

In this application, the terminal device may encrypt the first message by using the first encryption algorithm, where an input parameter of the first encryption algorithm includes the first channel key; and perform integrity protection on the first message by using the first integrity protection algorithm, where an input parameter of the first integrity protection algorithm includes the first channel key. For example, the first message includes the SUCI or the SUPI of the terminal device, and the NAS layer of the terminal device may use the first channel key as an encryption key, and perform symmetric encryption on the SUCI or the SUPI by using the first encryption algorithm. For a specific process, refer to the descriptions in FIG. 5 and FIG. 6, and details are not described again. Through this encryption process, the first message sent by the terminal device includes information obtained after the first message is symmetrically encrypted by using the first channel key as an encryption key and by using the first encryption algorithm, therefore, a third-party device can obtain only the encrypted information, and cannot obtain the SUCI or the SUPI before encryption, thereby implementing encryption protection for the SUCI or the SUPI.

How the terminal device determines the first encryption algorithm and the first integrity protection algorithm is not limited in this application.

For example, in implementation 1, the first encryption algorithm and the first integrity protection algorithm are preset. For example, the preset first encryption algorithm is 128-NEA1, and the preset first integrity protection algorithm is 128-NIA1. In this implementation, because the first encryption algorithm and the first integrity protection algorithm are preset, overheads of obtaining an encryption algorithm and an integrity protection algorithm between the network device and the terminal device can be reduced, thereby improving resource utilization.

In implementation 2, the network device may send a system information block or a second message to the terminal device, where the system information block or the second message includes at least one of the following:
a first encryption algorithm list, where the first encryption algorithm list includes at least one encryption algorithm; and a first integrity protection algorithm list, where the first integrity protection algorithm list includes at least one integrity protection algorithm.

The terminal device may determine the first encryption algorithm from the first encryption algorithm list, and/or determine the first integrity protection algorithm from the first integrity protection algorithm list.

For example, the first encryption algorithm list includes 128-NEA1 and 256-NEA1; and the first integrity protection algorithm list includes 128-NIA1 and 256-NIA1. It is assumed that the terminal device supports 256-NEA1 and 128-NIA1, and therefore, 256-NEA1 and 128-NIA1 may be selected.

This implementation is relatively flexible. The terminal device may select the first encryption algorithm and the first integrity protection algorithm based on the capability of the terminal device, so that the selected first encryption algorithm and the first integrity protection algorithm are better matched with the capability of the terminal device, thereby improving communication security.

In this implementation, the terminal device may further send third information to the network device, where the third information is used to indicate the first encryption algorithm and/or the first integrity protection algorithm, so that the network device may also perform encryption and/or integrity protection based on the first encryption algorithm and/or the first integrity protection algorithm, and a same encryption algorithm and/or integrity protection algorithm may be used for a message between the terminal device and the network device, so that the terminal device and the network device can decrypt each other's messages.

Implementation 3: The terminal device may send the channel characteristic parameter and/or the channel key generation algorithm supported by the terminal device to the network device. For example, the terminal device may send a third message to the network device, where the third message includes at least one of the following: a second encryption algorithm list, where the second encryption algorithm list includes at least one encryption algorithm, and the at least one encryption algorithm includes the first encryption algorithm; or a second integrity protection algorithm list, where the second integrity protection algorithm list includes at least one integrity protection algorithm, and the at least one integrity protection algorithm includes the first integrity protection algorithm.

The network device may determine the first encryption algorithm from the second encryption algorithm list, determine the first integrity protection algorithm from the second integrity protection algorithm list, and send fourth information to the terminal device, where the fourth information is used to indicate the first encryption algorithm and/or the first integrity protection algorithm.

In this implementation, the first encryption algorithm and/or the first integrity protection algorithm indicated by the network device are algorithms supported by the terminal device, so that the terminal device can encrypt and/or perform integrity protection on a message according to the foregoing algorithms, thereby achieving flexibility.

The foregoing is merely an example, and other cases are not described in detail.

Step 906: The network device decrypts and/or performs integrity verification on the first message based on the second channel key.

How the network device specifically decrypts and/or performs integrity verification on the first message based on the second channel key is not limited in this application. For example, refer to the descriptions in FIG. 5 and FIG. 6. Details of the specific process are not described again.

According to the method provided in this application, in an initial access process, the terminal device generates the first channel key based on the first reference signal from the network device; and the network device generates the second channel key based on the second reference signal from the terminal device, so that before the security mode is activated, the terminal device may encrypt and/or perform integrity protection on a to-be-sent message by using the first channel key, and the network device may encrypt and/or perform integrity protection on a to-be-sent message by using the second channel key, thereby resisting potential attacks in an initial access process, and enabling the terminal device and the network device to complete exchange of important information in the initial access process, thereby improving security of data transmission.

With reference to the foregoing descriptions, the following describes the process of this application in detail with reference to an initial access process.

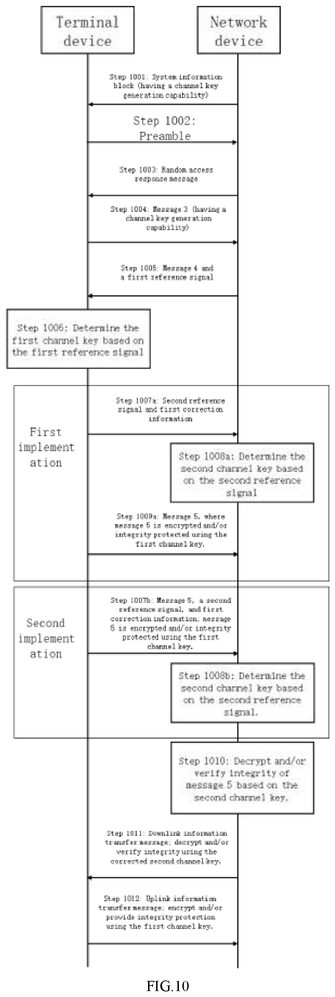

As shown in FIG. 10, it is a schematic flowchart of a communication method according to an embodiment of this application. In this procedure, a terminal device first generates a first channel key based on a reference signal of a network device, determines first correction information based on the first channel key, and sends the first correction information to the network device; and after generating a second channel key based on the reference signal of the terminal device, the network device corrects the second channel key based on the first correction information to obtain a corrected second channel key. The corrected second channel key is the same as the first channel key, so that the network device and the terminal device can decrypt messages sent by each other. Specifically, the method includes the following steps:
Step 1001: A network device sends a system information block.

The system information block may be an SIB1, or may be a system information block of another type. The system information block may indicate that the network device supports channel key generation. For example, the system information block includes channel key indication information, where the channel key indication information indicates that the network device supports channel key generation or has a channel key generation capability.

The system information block may further include other information. For example, the system information block includes resource configuration information, where the resource configuration information indicates a preamble (preamble) and/or a physical random access channel (physical random access channel, PRACH) resource, and the preamble and PRACH resource are used by the terminal device to perform random access. Optionally, the resource configuration information may further indicate a dedicated preamble and/or a dedicated PRACH resource. If a terminal device has a channel key generation capability, or expects to use a channel key for encryption and/or integrity protection, the terminal device may initiate random access through the dedicated preamble and/or the dedicated PRACH resource.

The foregoing is merely an example. The system information block may further include other content, which is not described herein by providing examples one by one.

Step 1002: The terminal device sends a preamble.

Before sending the preamble, the terminal device is in an RRC idle state or an RRC inactive state.

The preamble is used to initiate random access. The preamble may also be referred to as a random access preamble, a random access request message, a message 1 in a random access process, or the like, which is not limited in this application.

The preamble sent by the terminal device may be determined based on the system information block, and the PRACH resource used for sending the preamble may also be determined based on the system information block.

In an implementation, if the terminal device has a channel key generation capability, or expects to use a channel key for encryption and/or integrity protection, the terminal device may initiate random access by using a dedicated preamble and/or a dedicated PRACH resource, so that the network device may determine that the terminal device has the channel key generation capability, or determine that the terminal device expects to use the channel key for encryption and/or integrity protection. In this manner, the terminal device implicitly indicates the channel key generation capability or the expectation to use the channel key for encryption and/or integrity protection, thereby reducing signaling overheads.

Step 1003: The network device sends a random access response (random access response, RAR) message to the terminal device.

The random access response message may be referred to as a message 2 in a random access process or the like, which is not limited in this application.

The random access response message may include uplink grant (UL grant) information, where the uplink grant information is used to schedule a transmission resource for a message 3 in the random access process.

The message 3 may be an RRC setup request (RRCSetupRequest) message in an RRC setup process, and is used to request to set up an RRC connection. The message may include an RRC connection setup cause and an identifier of the terminal device, where the identifier of the terminal device may be an S-temporary mobile subscriber identity (S-TMSI) or a random number.

Alternatively, the message 3 may also be an RRC resume request (RRCResumeRequest) message in an RRC resume process, which is used to request to resume an RRC connection. The message may include an RRC connection resume cause and an identifier of the terminal device.

Alternatively, the message 3 may also be an RRC reestablishment request (RRCReestablishmentRequest) message in an RRC reestablishment process, which is used to request to reestablish an RRC connection. The message may include an RRC reestablishment cause and an identifier of the terminal device.

Step 1004: The terminal device sends a message 3 to the network device.

In this application, the message 3 may also be referred to as a third message or the like.

The content included in the message 3 is not limited in this application. For example, the message 3 may include fifth information, where the fifth information is used to indicate that the terminal device has a channel key generation capability, or expects to perform encryption and/or integrity protection by using a channel key. Optionally, when the system information block received by the terminal device indicates that the network device supports channel key generation, the message 3 carries the fifth information. This can ensure that capabilities of the network device and the terminal device are consistent, and prevent a case where the terminal device unilaterally generates a channel key when the network device does not have a channel key generation capability, thereby avoiding a case where the network device cannot decrypt a message encrypted by the terminal device, and improving system stability.

In another implementation, the fifth information may be located in a MAC control element (control element, CE). When the terminal device sends the message 3, the terminal device may send a MAC CE including the fifth information at the same time, so that after receiving the transport block corresponding to the message 3, the network device identifies and receives the MAC CE at the MAC layer.

Step 1005: The network device sends a message 4 and a first reference signal to the terminal device.

In this application, the message 4 may also be referred to as a second message or the like. The message 4 may be an RRC setup (RRCSetup) message in an RRC setup process, or the message 4 may be an RRC resume (RRCResume) message in an RRC resume process, or the message 4 may be an RRC reestablishment (RRCReestablishment) message in an RRC reestablishment process.

Optionally, the message 4 includes the first information, and the first information indicates the first resource.

Step 1006: The terminal device determines the first channel key based on the first reference signal.

For example, the terminal device measures the first reference signal to obtain a first channel measurement result, and determines the value of the first channel characteristic parameter based on the first channel measurement result. The terminal device may quantize the value of the first channel characteristic parameter according to the first channel key generation algorithm to obtain L bits, and use the L bits as the first channel key. L is an integer greater than 1, for example, L is 128 or 256.

How the terminal device determines the first channel characteristic parameter and the first channel key generation algorithm is not limited in this application. For example, the first channel characteristic parameter and the first channel key generation algorithm are preset.

For another example, the system information block or the message 4 includes at least one of the following: a first channel characteristic parameter list, or a first channel key generation algorithm list. The terminal device may determine the first channel characteristic parameter from the first channel characteristic parameter list, and/or determine the first channel key generation algorithm from the first channel key generation algorithm list.

For another example, the terminal device reports the second channel characteristic parameter list and/or the second channel key generation algorithm list by using the message 3. The network device may determine the first channel characteristic parameter from the second channel characteristic parameter list, determine the first channel key generation algorithm from the second channel key generation algorithm list, and send fourth information to the terminal device by using the message 4, where the fourth information is used to indicate the first channel characteristic parameter and/or the first channel key generation algorithm.

Step 1007a: The terminal device sends the second reference signal and the first correction information to the network device by using the first resource.

If the message 4 does not include the first information used to indicate the first resource, the first resource may also be preset.

In this application, the first calibration information is determined based on the first channel key, the first calibration information is used to correct the second channel key, and the second channel key is generated by the network device.

Theoretically, the first channel key and the second channel key are the same. However, due to reasons such as a measurement error, the first channel key and the second channel key finally obtained may not necessarily be the same. The terminal device may add a cyclic redundancy check to the first channel key bit sequence, and encode the bit sequence to which the cyclic redundancy check is added by using a low-density parity-check code (Low-Density Parity-Check Codes, LDPC) or a polar code or the like, to obtain an encoded bit sequence. The terminal device may use a part of the encoded bit sequence as the first calibration information.

Step 1008a: The network device determines the second channel key based on the second reference signal.

For a specific process in which the network device determines the second channel key, refer to the foregoing descriptions, and details are not described herein again.

Optionally, if the network device receives the first correction information, the network device may further correct the second channel key based on the first correction information, to obtain a corrected second channel key.

Step 1009a: The terminal device sends a message 5, where the message 5 is encrypted and/or integrity protected by using the first channel key.

For example, the message 5 is an RRC setup complete (RRCSetupComplete) message in an RRC setup process, or the message 5 is an RRC resume complete (RRCResumeComplete) message in an RRC resume process, or the message 5 is an RRC reestablishment complete (RRCReestablishmentComplete) message in an RRC reestablishment process.

The message 5 includes information such as an SUCI of the terminal device. By using this method, because the message including the SUCI is encrypted and/or integrity protected before the security mode is activated, the SUCI can be prevented from being obtained by a third-party device, thereby improving data transmission security.

Optionally, the terminal device may perform encryption and/or integrity protection only on the SUCI in the message 5, and does not perform encryption and integrity protection on other information in the message 5. In this way, while the SUCI is protected, overheads of the terminal device can be reduced, thereby improving a battery life capability of the terminal device.

In this application, the terminal device may encrypt the message 5 by using a first encryption algorithm, where an input parameter of the first encryption algorithm includes the first channel key; and perform integrity protection on the message 5 by using a first integrity protection algorithm, where an input parameter of the first integrity protection algorithm includes the first channel key. For a specific process, refer to the descriptions in FIG. 5 and FIG. 6, and details are not described again.

How the terminal device determines the first encryption algorithm and the first integrity protection algorithm is not limited in this application.

For example, the first encryption algorithm and the first integrity protection algorithm are preset.

For another example, the system information block or the message 4 includes at least one of the following: a first encryption algorithm list; and a first integrity protection algorithm list.

The terminal device may determine the first encryption algorithm from the first encryption algorithm list, and/or determine the first integrity protection algorithm from the first integrity protection algorithm list. The terminal device may further send the third information by using the message 3 or the message 5, where the third information is used to indicate the first encryption algorithm and/or the first integrity protection algorithm.

If the terminal device sends the third information by using the message 5, the terminal device may not perform encryption and integrity protection on the third information, but perform encryption and integrity protection only on another part in the message 5.

For another example, the message 3 sent by the terminal device includes at least one of the following: a second encryption algorithm list; and a second integrity protection algorithm list.

The network device may determine the first encryption algorithm from the second encryption algorithm list, determine the first integrity protection algorithm from the second integrity protection algorithm list, and send fourth information to the terminal device by using message 4, where the fourth information is used to indicate the first encryption algorithm and/or the first integrity protection algorithm.

The foregoing step 1007a to step 1009a are a first implementation provided in this application. In a second implementation, step 1007a to step 1009a may be replaced with step 1007b to step 1008b.

Step 1007b: The terminal device sends a message 5, a second reference signal, and first correction information to the network device.

The terminal device may send the second reference signal and the first correction information on the time-frequency resource on which the message 5 is carried. In this case, the message 5 is encrypted and/or integrity protected by using the first channel key, but the second reference signal and the first correction information are not encrypted and integrity protected by using the first channel key. In this way, the message 5 can be protected through the slot pair, and the network device can also obtain the second reference signal and the first correction information.

Step 1008b: The network device determines the second channel key based on the second reference signal.

For specific content of this step, refer to step 1008. Details are not described herein again.

Step 1010: The network device decrypts and/or performs integrity verification on the message 5 based on the second channel key.

If the network device corrects the second channel key based on the first correction information, the network device decrypts and/or performs integrity verification on the message 5 based on the corrected second channel key at this time.

For other messages in an initial access process, encryption and/or integrity protection may also be performed. For example, the method may further include the following steps:
Step 1011: The network device sends a downlink information transfer (DLInformationTransfer) message to the terminal device.

The downlink information transfer message is decrypted and/or integrity verified by using the corrected second channel key.

Correspondingly, the terminal device decrypts and/or performs integrity verification on the downlink information transfer message based on the first channel key.

Step 1012: The terminal device sends an uplink information transfer (ULInformationTransfer) message to the network device.

The uplink information transfer message is encrypted and/or integrity protected by using the first channel key.

Correspondingly, the network device decrypts and/or performs integrity verification on the uplink information transfer message based on the corrected second channel key.

The foregoing is merely an example, and other messages in the initial access process are not further illustrated.

It can be learned from the foregoing process that, in the initial access process, the channel key is determined between the network device and the terminal device before the security mode is activated, so that the channel key may be used to encrypt and/or perform integrity protection on a message before the security mode is activated, for example, on message 5, thereby preventing a third-party device from obtaining information of the terminal device and improving security of data transmission.

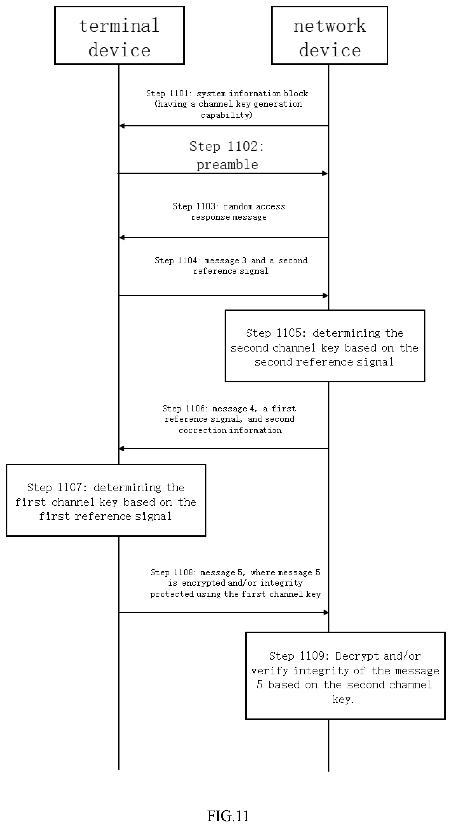

In this application, the network device may alternatively first generate the second channel key, and then the terminal device generates the first channel key. FIG. 11 is a schematic flowchart of a communication method according to an embodiment of this application. In this procedure, the network device first generates the second channel key based on the reference signal of the terminal device, the network device determines the second correction information based on the second channel key, and sends the second correction information to the terminal device. After generating the first channel key based on the reference signal of the network device, the terminal device corrects the first channel key based on the second correction information, to obtain a corrected first channel key; where the corrected first channel key is the same as the second channel key. This can ensure that the network device and the terminal device can decrypt each other's messages sent by each other. Specifically, the method includes the following steps:
Step 1101: A network device sends a system information block.
Step 1102: A terminal device sends a preamble.
Step 1103: The network device sends a random access response message to the terminal device.
Step 1104: The terminal device sends a message 3 and a second reference signal to the network device.

The resource where the second reference signal is located is preset.

For specific content of step 1101 to step 1104, refer to the descriptions of step 1001 to step 1004. Details are not described herein again.

Step 1105: The network device determines the second channel key based on the second reference signal.

For specific content of step 1105, refer to the description of step 1008a. Details are not described herein again.

Step 1106: The network device sends a message 4, the first reference signal, and the second correction information to the terminal device.

In this application, the second correction information is determined based on the second channel key, the second correction information is used to correct the first channel key, and the first channel key is generated by the terminal device. How the second correction information is determined is not limited in this application, and for details, refer to the foregoing descriptions of the first correction information.

For other content of the message 4 and the first reference signal, refer to the description in step 1005, and details are not described herein again.

Step 1107: The terminal device determines the first channel key based on the first reference signal.

For specific content of step 1107, refer to the description in step 1006, and details are not described herein again.

Step 1108: The terminal device sends a message 5, where the message 5 is encrypted and/or integrity protected by using the first channel key.

If the terminal device corrects the first channel key based on the second correction information, the terminal device encrypts and/or integrity protects the message 5 based on the corrected first channel key at this time.

The message 5 includes information such as the SUCI of the terminal device. For other content of the message 5, refer to the description in step 1009a, and details are not described herein again.

Step 1109: The network device decrypts and/or performs integrity verification on the message 5 based on the second channel key.

For other messages in an initial access process, encryption and/or integrity protection may also be performed. For example, refer to the descriptions in steps 1011 to 1012, and details are not described herein again.

From the foregoing process, it can be learned that in an initial access process, the channel key is determined between the network device and the terminal device before the security mode is activated, so that the channel key may be used to perform encryption and/or integrity protection on a message before the security mode is activated, for example, on the message 5, thereby preventing a third-party device from obtaining information of the terminal device, and improving security of data transmission.

It may be understood that, to implement the functions in the foregoing embodiments, the terminal device or the network device includes corresponding hardware structures and/or software modules for performing the functions. A person skilled in the art should easily be aware that, with reference to the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

The following is a schematic structural diagram of possible communication apparatuses provided in the embodiments of this application. These communication apparatuses may be configured to implement functions of the terminal device or the network device in the foregoing method embodiments, and therefore can also achieve beneficial effects of the foregoing method embodiments.

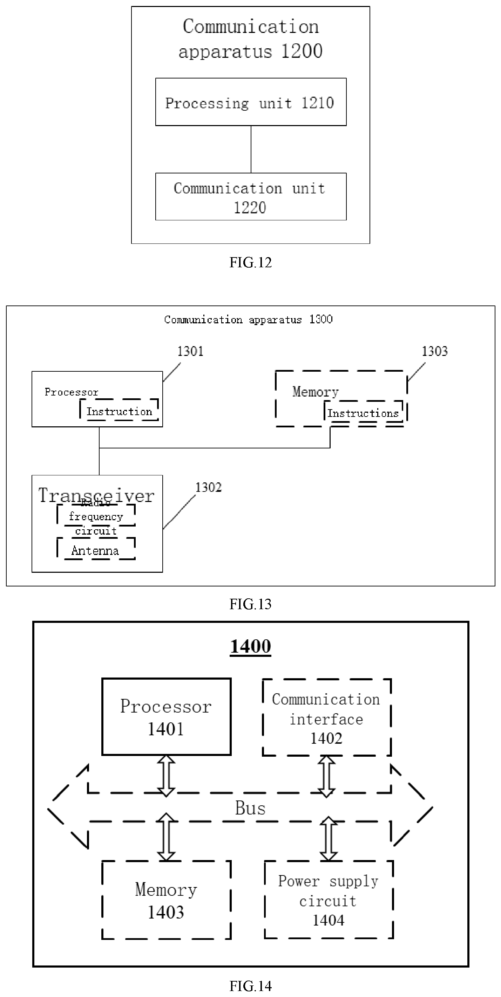

As shown in FIG. 12, the communication apparatus 1200 includes a processing unit 1210 and a communication unit 1220. The communication apparatus 1200 is configured to implement functions of the terminal device or the network device in the method embodiments shown above.

When the communication apparatus 1200 is configured to implement a function of the terminal device:
a communication unit, configured to receive a first reference signal from a network device;
a processing unit, configured to determine a first channel key based on the first reference signal, where the first channel key is used to perform encryption and/or integrity protection on a message sent before a security mode is activated;

The communications unit is configured to send a first message, wherein the first message is encrypted and/or integrity protected by using the first channel key, and the first message comprises identification information of a terminal device.

When the communications apparatus 1200 is configured to implement a function of the network device:
a communications unit, configured to receive a second reference signal from the terminal device;
a processing unit, configured to determine a second channel key based on the second reference signal, wherein the second channel key is used to perform encryption and/or integrity protection on a message sent before a security mode is activated;
the communications unit is configured to receive a first message from the terminal device, wherein the first message comprises identification information of the terminal device;

The processing unit is configured to decrypt and/or perform integrity verification on the first message based on the second channel key.

For more detailed descriptions of the processing unit 1210 and the communications unit 1220, directly refer to the related descriptions in the foregoing method embodiments, and details are not described herein again.

It should be understood that the division of the units in the foregoing apparatus is merely logical function division. In actual implementation, all or some of the units may be integrated into one physical entity, or may be physically separated. In addition, all the units in the apparatus may be implemented by software through invoking by a processing element, or may be implemented entirely in a form of hardware, or some units may be implemented by software through invoking by a processing element, and some units may be implemented in a form of hardware. For example, each unit may be an independently disposed processing element, or may be integrated into a chip of the apparatus for implementation. In addition, each unit may be stored in a form of a program in a memory, and a processing element of the apparatus invokes the program to perform a function of the unit. In addition, all or some of these units may be integrated together, or may be implemented independently. The processing element herein may also be referred to as a processor, and may be an integrated circuit that has a signal processing capability. In an implementation process, the operations of the foregoing methods or the foregoing units may be implemented by an integrated logic circuit of hardware in the processing element, or may be implemented by software through invoking by the processing element.

In an example, the units in any one of the foregoing apparatuses may be one or more integrated circuits configured to implement the foregoing methods, for example, one or more application-specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when the units in the apparatus may be implemented in a form of a processing element scheduler, the processing element may be a processor, for example, a general-purpose central processing unit (central processing unit, CPU), or another processor that can invoke a program. For another example, these units may be integrated together to implement a system on a chip (system-on-a-chip, SOC).

The foregoing receiving unit is an interface circuit of the apparatus, configured to receive a signal from another apparatus. For example, when the apparatus is implemented in a chip manner, the receiving unit is an interface circuit of the chip, configured to receive a signal from another chip or apparatus. The foregoing sending unit is an interface circuit of the apparatus, configured to send a signal to another apparatus. For example, when the apparatus is implemented in a chip manner, the sending unit is an interface circuit of the chip, configured to send a signal to another chip or apparatus.

As another possible product form, the terminal device or the network device in the embodiments of this application may be implemented by using a general bus architecture. For ease of description, refer to FIG. 13. FIG. 13 is a schematic structural diagram of a communications apparatus 1300 according to an embodiment of this application. The communications apparatus 1300 includes a processor 1301 and a transceiver 1302. The communications apparatus 1300 may be a terminal device, or a chip or a chip system in the terminal device; or the communications apparatus 1300 may be a network device, or a chip or a module in the network device. FIG. 13 shows only main components of the communications apparatus 1300. In addition to the processor 1301 and the transceiver 1302, the communications apparatus 1300 may further include a memory 1303 and an input/output apparatus (not shown in the figure).

Optionally, the processor 1301 is mainly configured to process communication protocols and communication data, control the entire communication apparatus, execute software programs, and process data of the software programs. The memory 1303 is mainly configured to store software programs and data. The transceiver 1302 may include a radio frequency circuit and an antenna, where the radio frequency circuit is mainly configured to perform conversion between a baseband signal and a radio frequency signal, and process the radio frequency signal. The antenna is mainly configured to receive and transmit radio frequency signals in the form of electromagnetic waves. The input/output device, such as a touchscreen, display, or keyboard, is mainly configured to receive data input by a user and output data to the user.

Optionally, the processor 1301, the transceiver 1302, and the memory 1303 may be connected through a communication bus.

When the communication device is powered on, the processor 1301 may read the software program from the memory 1303, interpret and execute the instructions of the software program, and process the data of the software program. When there is a need to send data wirelessly, the processor 1301 performs baseband processing on the data to be sent, and then outputs the baseband signal to the radio frequency circuit. The radio frequency circuit performs radio frequency processing on the baseband signal and then sends the radio frequency signal to the outside in the form of electromagnetic waves through the antenna. When data is received by the communication device, the radio frequency circuit receives the radio frequency signal through the antenna, converts the radio frequency signal into a baseband signal, and outputs the baseband signal to the processor 1301. The processor 1301 then converts the baseband signal into data and processes the data.

In another implementation, the radio frequency circuit and the antenna may be disposed independently of the processor performing baseband processing. For example, in a distributed scenario, the radio frequency circuit and the antenna may be disposed separately from the communications apparatus in a remote manner.

In some embodiments, in terms of hardware implementation, a person skilled in the art may FIG.out that the communication apparatus 1200 may be implemented in a form of the communication apparatus 1300 shown in FIG. 13.

As an example, the function/implementation process of the processing unit 1210 in FIG. 12 may be implemented by the processor 1301 in the communication apparatus 1300 shown in FIG. 13 by invoking the computer-executable instructions stored in the memory 1303. The function/implementation process of the communication unit 1220 in FIG. 12 may be implemented by the transceiver 1302 in the communication apparatus 1300 shown in FIG. 13.

As yet another possible product form, the terminal device or the network device in this application may use the composition structure shown in FIG. 14 or include the components shown in FIG. 14. FIG. 14 is a schematic diagram of a composition of a communication apparatus 1400 according to this application.

As shown in FIG. 14, the communications apparatus 1400 includes at least one processor 1401. Optionally, the communications apparatus further includes a communications interface 1402. When the program instructions involved are executed by the at least one processor 1401, the apparatus 1400 may be enabled to implement the method provided in any one of the foregoing embodiments and any possible design thereof. Alternatively, the processor 1401 is configured to implement the method provided in any one of the foregoing embodiments and any possible design thereof by using a logic circuit or by executing code instructions.

The communications interface 1402 may be configured to receive program instructions and transmit the program instructions to the processor. Alternatively, the communications interface 1402 may be configured to perform communication interaction between the communications apparatus 1400 and another communications device, for example, exchange control signaling and/or service data. For example, the communications interface 1402 may be configured to receive a signal from another apparatus other than the communications apparatus 1400 and transmit the signal to the processor 1401, or send a signal from the processor 1401 to another communications apparatus other than the communications apparatus 1400.

Optionally, the communications interface 1402 may be a code and/or data read/write interface circuit, or the communications interface 1402 may be a signal transmission interface circuit between the communication processor and the transceiver, or may be a pin of the chip.

Optionally, the communication apparatus 1400 may further include at least one memory 1403. The memory 1403 may be configured to store program instructions and/or data that are required and involved. It should be noted that the memory 1403 may exist independently of the processor 1401, or may be integrated with the processor 1401. The memory 1403 may be located inside the communication apparatus 1400, or may be located outside the communication apparatus 1400, which is not limited.

Optionally, the communication apparatus 1400 may further include a power supply circuit 1404, which may be configured to supply power to the processor 1401. The power supply circuit 1404 may be located in a same chip as the processor 1401, or may be located in another chip other than the chip in which the processor 1401 is located.

Optionally, the communication apparatus 1400 may further include a bus, and the parts in the communication apparatus 1400 may be interconnected through the bus.

In some embodiments, in terms of hardware implementation, a person skilled in the art may FIG.out that the communication apparatus 1200 shown in FIG. 12 may be implemented in a form of the communication apparatus 1400 shown in FIG. 14.

In an example, the function/implementation process of the processing unit 1210 in FIG. 12 may be implemented by the processor 1401 in the communication apparatus 1400 shown in FIG. 14 by invoking the computer-executable instructions stored in the memory 1403, and the function/implementation process of the communication unit 1220 in FIG. 12 may be implemented by the communication interface 1402 in the communication apparatus 1400 shown in FIG. 14.

It should be noted that the structure shown in FIG. 14 does not constitute a specific limitation on the terminal device or the network device. For example, in some other embodiments of this application, the terminal device or the network device may include more or fewer components than those shown in the figure, or some components may be combined, or some components may be split, or there may be different component arrangements. The components shown in the FIG.may be implemented by hardware, software, or a combination of software and hardware.

When the communication apparatus is a chip applied to a terminal, the terminal chip implements the functions of the terminal in the foregoing method embodiments. The terminal chip receives information from other modules (such as a radio frequency module or an antenna) in the terminal, where the information is sent by the base station to the terminal; or the terminal chip sends information to other modules (such as a radio frequency module or an antenna) in the terminal, where the information is sent by the terminal to the base station.

When the communication apparatus is a module applied to a base station, the base station module implements the functions of the base station in the foregoing method embodiments. The base station module receives information from other modules (such as a radio frequency module or an antenna) in the base station, where the information is sent by a terminal to the base station; or the base station module sends information to other modules (such as a radio frequency module or an antenna) in the base station, where the information is sent by the base station to the terminal. The base station module herein may be a baseband chip of the base station, or may be a DU or another module, where the DU herein may be a DU under an open radio access network (open radio access network, O-RAN) architecture.

It is understandable that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. A general-purpose processor may be a microprocessor, or may be any conventional processor.

The method steps in the embodiments of this application may be implemented through hardware, or may be implemented by a processor executing software instructions. The software instructions may include corresponding software modules, which may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. In addition, the ASIC may be located in a base station or a terminal. Certainly, the processor and the storage medium may also exist as discrete components in the base station or the terminal.

In the foregoing embodiments, the embodiments may be implemented entirely or partially by software, hardware, firmware, or any combination thereof. When software is used to implement the embodiments, the embodiments may be implemented entirely or partially in the form of a computer program product. The computer program product includes one or more computer programs or instructions. When the computer program or the instruction is loaded and executed on a computer, the procedures or functions described in the embodiments of this application are performed entirely or partially. The computer may be a general-purpose computer, a dedicated computer, a computer network, a network device, user equipment, or another programmable apparatus. The computer program or the instruction may be stored in a computer-readable storage medium, or may be transmitted from one computer-readable storage medium to another computer-readable storage medium. For example, the computer program or the instruction may be transmitted from a website, computer, server, or data center to another website, computer, server, or data center in a wired or wireless manner. The computer-readable storage medium may be any usable medium accessible to the computer, or a data storage device, such as a server or a data center, integrating one or more usable media. The usable medium may be a magnetic medium, such as a floppy disk, a hard disk drive, or a magnetic tape; an optical medium, such as a digital video disc; or a semiconductor medium, such as a solid state disk. The computer-readable storage medium may be a volatile or a non-volatile storage medium, or may include both a volatile and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may be implemented completely in a hardware embodiment, completely in a software embodiment, or in an embodiment in which software and hardware are combined. In addition, this application may be implemented in the form of a computer program product implemented on one or more computer-usable storage media (including but not limited to, a disk storage, an optical storage, and the like) that include computer-usable program code.

This application is described with reference to flowcharts and/or block diagrams of the methods, devices (systems), and computer program products according to this application. It should be understood that each process and/or block in the flowcharts and/or block diagrams, and a combination of processes and/or blocks in the flowcharts and/or block diagrams may be implemented by computer program instructions. These computer program instructions may be provided to a processor of a general-purpose computer, a special-purpose computer, an embedded processor, or another programmable data processing device to produce a machine, so that the instructions executed by a processor of the computer or another programmable data processing device generate an apparatus for implementing a specific function in one or more processes in the flowcharts and/or in one or more blocks in the block diagrams.

These computer program instructions may also be stored in a computer-readable memory that is capable of causing a computer or another programmable data processing device to operate in a specific manner, so that the instructions stored in the computer-readable memory produce an article of manufacture that includes an instruction device, which implements a function specified in one or more processes in the flowcharts and/or one or more blocks in the block diagrams.

It is clearly understood that a person skilled in the art can make various modifications and variations to this application without departing from the scope of this application. Thus, if these modifications and variations of this application fall within the scope of the claims of this application and their equivalent technologies, this application is also intended to cover these modifications and variations.

## Claims

1. A communication method, comprising:
receiving a first reference signal from a network device;
determining a first channel key based on the first reference signal, wherein the first channel key is used for encrypting and/or integrity protection of a message sent before a security mode is activated;
sending a first message, wherein the first message is encrypted and/or integrity protected by using the first channel key, and the first message comprises identification information of a terminal device.

2. The method according to claim 1, wherein the method further comprises:
receiving first information from the network device, wherein the first information is used to indicate a first resource;
sending a second reference signal and first correction information through the first resource, wherein the first correction information is determined based on the first channel key, the second reference signal is used to determine a second channel key, and the first correction information is used to correct the second channel key.

3. The method according to claim 2, wherein the first information is located in a system information block SIB, or the first information is located in a random access response RAR message in a random access process, or the first information is located in a second message.

4. The method according to claim 1, wherein the method further comprises:
receiving second correction information from the network device, wherein the second correction information is used to correct a first channel key;
correcting the first channel key based on the second correction information to obtain a corrected first channel key, wherein the corrected first channel key is used to encrypt and/or provide integrity protection for a message sent before a security mode is activated.

5. The method according to any one of claims 1 to 4, wherein the determining a first channel key based on the first reference signal comprises:
determining a first channel measurement result based on the first reference signal;
determining a value of the first channel characteristic parameter based on the first channel measurement result;
determining the first channel key based on the value of the first channel characteristic parameter and a first channel key generation algorithm.

6. The method according to claim 5, wherein the method further comprises:
receiving the system information block SIB or the second message from the network device, wherein the system information block SIB or the second message comprises at least one of the following:
a channel characteristic parameter list, wherein the channel characteristic parameter list comprises at least one channel characteristic parameter;
a channel key generation algorithm list, wherein the channel key generation algorithm list comprises at least one channel key generation algorithm.

7. The method according to claim 6, wherein the method further comprises:
sending second information, wherein the second information is used to indicate at least one of the following:
the first channel characteristic parameter;
the first channel key generation algorithm.

8. The method according to any one of claims 1 to 7, wherein an algorithm for encrypting the first message is a first encryption algorithm, an algorithm for integrity protecting the first message is a first integrity protection algorithm, input parameters of the first encryption algorithm and the first integrity protection algorithm comprise the first channel key; and the method further comprises:
receiving the second message from the network device, wherein the system information block SIB, or the second message, comprises at least one of the following:
a first encryption algorithm list, wherein the first encryption algorithm list comprises at least one encryption algorithm;
a first integrity protection algorithm list, wherein the first integrity protection algorithm list comprises at least one integrity protection algorithm.

9. The method according to claim 8, wherein the method further comprises:
sending third information, wherein the third information is used to indicate at least one of the following:
the first encryption algorithm;
the first integrity protection algorithm.

10. The method according to any one of claims 1 to 7, wherein an algorithm for encrypting the first message is a first encryption algorithm, an algorithm for performing integrity protection on the first message is a first integrity protection algorithm, input parameters of the first encryption algorithm and the first integrity protection algorithm comprise the first channel key; and the method further comprises:
sending a third message, wherein the third message comprises at least one of the following:
a second encryption algorithm list, wherein the second encryption algorithm list comprises at least one encryption algorithm, and the at least one encryption algorithm comprises the first encryption algorithm;
a second integrity protection algorithm list, wherein the second integrity protection algorithm list comprises at least one integrity protection algorithm, and the at least one integrity protection algorithm comprises the first integrity protection algorithm.

11. The method according to claim 10, wherein the method further comprises:
receiving fourth information from the network device, wherein the fourth information indicates at least one of the following:
the first encryption algorithm;
the first integrity protection algorithm.

12. The method according to any one of claims 1 to 11, wherein the first message is a Radio Resource Control RRC setup complete (RRCSetupComplete) message, an RRC resume complete (RRCResumeComplete) message, or an RRC reestablishment complete (RRCReestablishmentComplete) message.

13. The method according to any one of claims 3, 6, or 8, wherein the second message is an RRC setup (RRCSetup) message, an RRC resume (RRCResume) message, or an RRC reestablishment (RRCReestablishment) message.

14. The method according to claim 10, wherein the third message is an RRC setup request (RRCSetupRequest) message, an RRC resume request (RRCResumeRequest) message, or an RRC reestablishment request (RRCReestablishmentRequest) message.

15. A communication method, comprising:
receiving a second reference signal from the terminal device;
determining a second channel key based on the second reference signal, wherein the second channel key is used to encrypt and/or provide integrity protection for a message sent before a security mode is activated;
receiving a first message from the terminal device, wherein the first message comprises identification information of the terminal device;
decrypting and/or verifying integrity of the first message based on the second channel key.

16. The method according to claim 15, wherein the method further comprises:
receiving first correction information from the terminal device, wherein the first correction information is used to correct the second channel key;
correcting the first channel key based on the first correction information to obtain a corrected second channel key, wherein the corrected second channel key is used to encrypt and/or provide integrity protection for a message sent before the security mode is activated.

17. The method according to claim 15, wherein the method further comprises:
sending a first reference signal and second correction information; wherein the second correction information is determined based on the second channel key, the first reference signal is used to determine a first channel key, and the second correction information is used to correct the first channel key.

18. The method according to any one of claims 15 to 17, wherein the determining a second channel key based on the second reference signal comprises:
determining a second channel measurement result based on the second reference signal;
determining a value of a first channel characteristic parameter based on the second channel measurement result;
determining the second channel key based on the value of the first channel characteristic parameter and a first channel key generation algorithm.

19. The method according to claim 18, wherein the method further comprises:
sending a system information block SIB or a second message, wherein the system information block SIB or the second message comprises at least one of the following:
a channel characteristic parameter list, wherein the channel characteristic parameter list comprises at least one channel characteristic parameter;
a channel key generation algorithm list, wherein the channel key generation algorithm list comprises at least one channel key generation algorithm.

20. The method according to claim 19, wherein the method further comprises:
receiving second information from the terminal device, wherein the second information is used to indicate at least one of the following:
the first channel characteristic parameter;
the first channel key generation algorithm.

21. The method according to any one of claims 15 to 18, wherein an algorithm for encrypting the first message is a first encryption algorithm, an algorithm for integrity protecting the first message is a first integrity protection algorithm, input parameters of the first encryption algorithm and the first integrity protection algorithm comprise the first channel key; and the method further comprises:
sending a system information block SIB or a second message, wherein the system information block SIB or the second message comprises at least one of the following:
a first encryption algorithm list, wherein the first encryption algorithm list comprises at least one encryption algorithm;
a first integrity protection algorithm list, wherein the first integrity protection algorithm list comprises at least one integrity protection algorithm;

22. The method according to any one of claims 15 to 20, wherein an algorithm for encrypting the first message is a first encryption algorithm, an algorithm for performing integrity protection on the first message is a first integrity protection algorithm, the input parameter of the first encryption algorithm and the input parameter of the first integrity protection algorithm comprise the first channel key; and the method further comprises:
receiving a third message from the terminal device, wherein the third message comprises at least one of the following:
a second encryption algorithm list, wherein the second encryption algorithm list comprises at least one encryption algorithm, and the at least one encryption algorithm comprises the first encryption algorithm;
a second integrity protection algorithm list, wherein the second integrity protection algorithm list comprises at least one integrity protection algorithm, and the at least one integrity protection algorithm comprises the first integrity protection algorithm.

23. A communication apparatus, comprising:
a communication unit, configured to receive a first reference signal from a network device;
a processing unit, configured to determine a first channel key based on the first reference signal, wherein the first channel key is used to perform encryption and/or integrity protection on a message sent before a security mode is activated;
the communication unit is configured to send a first message, wherein the first message is encrypted and/or integrity protected by using the first channel key, and the first message comprises identification information of a terminal device.

24. A communication apparatus, comprising:
A communications unit, configured to receive a second reference signal from a terminal device;
a processing unit, configured to determine a second channel key based on the second reference signal, wherein the second channel key is used to perform encryption and/or integrity protection on a message sent before a security mode is activated;
the communications unit is configured to receive a first message from the terminal device, wherein the first message comprises identification information of the terminal device;
the processing unit is configured to decrypt and/or perform integrity verification on the first message based on the second channel key.

25. A communication apparatus, comprising a processor, wherein;
The processor is configured to execute the computer program or instructions stored in the memory, so that the communication apparatus implements the method according to any one of claims 1 to 22.

26. A computer-readable storage medium, comprising a computer program or instructions stored thereon, wherein when the computer program or the instructions are run on a computer, the computer is enabled to implement the method according to any one of claims 1 to 22.

27. A chip or a chip system, comprising a processor, wherein the processor is coupled to a memory, and is configured to execute the computer program or instructions stored in the memory, so that the chip system implements the method according to any one of claims 1 to 22.

28. A computer program product, wherein when the computer program product is read and executed by a computer, the method according to any one of claims 1 to 22 is performed.
